# EUROPÄISCHE PATENTSCHRIFT

(11) **EP 1 801 988 B1**
(45) Veröffentlichungstag und Bekanntmachung des Hinweises auf die Patenterteilung: **07.01.2015**
(21) Anmeldenummer: 06023835.9
(22) Anmeldetag: 16.11.2006
(51) Int. Cl.: H04B 1/38

(54) **Hochfrequenz-Empfangseinheit**
High frequency receiver
Récepteur haute fréquence

(30) Priorität: 21.12.2005 DE 102005061335
(43) Veröffentlichungstag der Anmeldung: 27.06.2007
(73) Patentinhaber: Rohde & Schwarz GmbH & Co. KG, 81671 München (DE)
(72) Erfinder: Braun, Michael, 80995 München (DE)
(74) Vertreter: Körfer, Thomas

(56) Entgegenhaltungen:
- EP-A1- 1 598 983
- WO-A-00/76096
- WO-A2-01/43516
- WO-A2-99/17476
- FR-A- 2 839 591
- US-A1- 2002 042 282
- US-A1- 2002 103 001

## Beschreibung

Die Erfindung betrifft und geht aus von einer Hochfrequenz-Empfangseinheit laut Oberbegriff des Hauptanspruches.

Ferngesteuerte Hochfrequenz-Sende- und/oder Empfangseinrichtungen dieser Art sind z. B. aus der WO 00/76096 A, WO 99/17476 A2 bzw. WO 01/43516 A2 bekannt. Der externe Rechner in der Zentrale, mit dem über die Fernsteuerung die gewünschten Einstellungen des Empfängers in das Prozessormodul im Gehäuse einlesbar sind, steht dabei über eine ständig wirksame feste Fernsteuer-Verbindung mit dem Prozessormodul im abgesetzten Gehäuse in Verbindung. Es ist auch aus der WO 01/43516 A2 bekannt, über eine solche ständige feste Fernsteuer-Verbindung zusätzliche Funktionen wie Klimageräte oder dergleichen im abgesetzten Gehäuse zu steuern.

Bei reinen Hochfrequenz (Radiafrequenz RF)-Empfangsenheiten, mit denen in einem breiten Frequenzbereich von beispielsweise 100 kHz bis 6 GHz beliebige Hochfrequenzsignale empfangen werden sollen, soll der Empfänger jederzeit von der Zentrale aus für neue Empfangsaufgaben einstellbar sein, ohne dass hierfür eine ständig wirksame Fernsteuer-Verbindung zwischen der Zentrale und der Empfangseinheit aufrechterhalten wird.

Es ist daher Aufgabe der Erfindung, eine Hochfrequenz-Empfangseinheit zu schaffen, die abgesetzt von einer Zentrale völlig autark betreibbar ist und die trotzdem jederzeit ohne ständiger Fernsteuer-Verbindung von der Zentrale aus neu eingestellt werden kann.

Diese Aufgabe wird erfindungsgemäß durch eine Hochfrequenz-Empfangseinheit laut Hauptanspruch 1 gelöst. Vorteilhafte Weiterbildungen ergeben sich aus den Unteransprüchen.

Die erfindungsgemäße Hochfrequenz-Empfangseinheit enthält in dem wetterfesten Gehäuse all diejenigen elektronischen Module einschließlich Stromversorgung, die zum völlig selbständigen Betrieb eines Hochfrequenz-Empfängers nötig sind. Die Empfangseinheit ist über eine angebaute Antenne in einem breiten Frequenzbereich von beispielsweise 100 kHz bis 6 GHz abstimmbar. Sie kann z. B. im Suchlauf betrieben werden und dabei kontinuierlich den ganzen Frequenzbereich durchlaufen oder, gesteuert durch das Prozessormodul, auf einzelne vorgegebene Festfrequenzen abgestimmt werden. Die dazu erforderliche Einstellung des Empfangsmoduls erfolgt über das Prozessormodul, dem seinerseits die gewünschten Einstellungen aus der Zentrale über eine Fernbedienungs-Verbindung zugeführt werden. Die dazu erforderliche Fernbedienungs-Verbindung ist gemäß der Erfindung nur für das einmalige Eingeben der Einstellungen aus der Zentrale in das Prozessormodul erforderlich. Anschließend kann diese Fernbedienungs-Verbindung wieder unterbrochen werden und der Empfänger führt dann selbständig den Empfang mit der einmal gewählten Einstellung durch.

Die dabei gewonnenen Empfangsdaten werden im Prozessormodul zwischengespeichert und können jederzeit von der Zentrale aus mittels eines üblichen Rechners abgefragt und dann in der Zentrale ausgewertet werden. Gemäß der Erfindung ist also keine ständige Wirkverbindung zwischen Zentrale und Empfangseinheit erforderlich. Die Abfrage der Empfangsdaten kann jederzeit auch während des Ablaufs des eingestellten Empfangsprogramms erfolgen. Die erfindungsgemäße Empfangseinheit ist damit insbesondere für Aufgaben geeignet, bei denen mehrere solcher Einheiten in einem größeren Empfangsgebiet, gesteuert durch eine Zentrale, betrieben werden sollen. Eine erfindungsgemäße Empfangseinheit ist überall auf der Welt einsetzbar, da sie auch unter extremen Temperaturbedingungen betreibbar ist.

Die Erfindung wird im Folgenden anhand der schematischen Zeichnung an einem Ausführungsbeispiel näher erläutert. In der Zeichnung zeigen:
- Fig. 1: das Prinzipschaltbild einer erfindungsgemäßen Empfangseinheit und
- Fig. 2: die Montage einer solchen Empfangseinheit an einem Mast mit den zugehörigen Antennen.

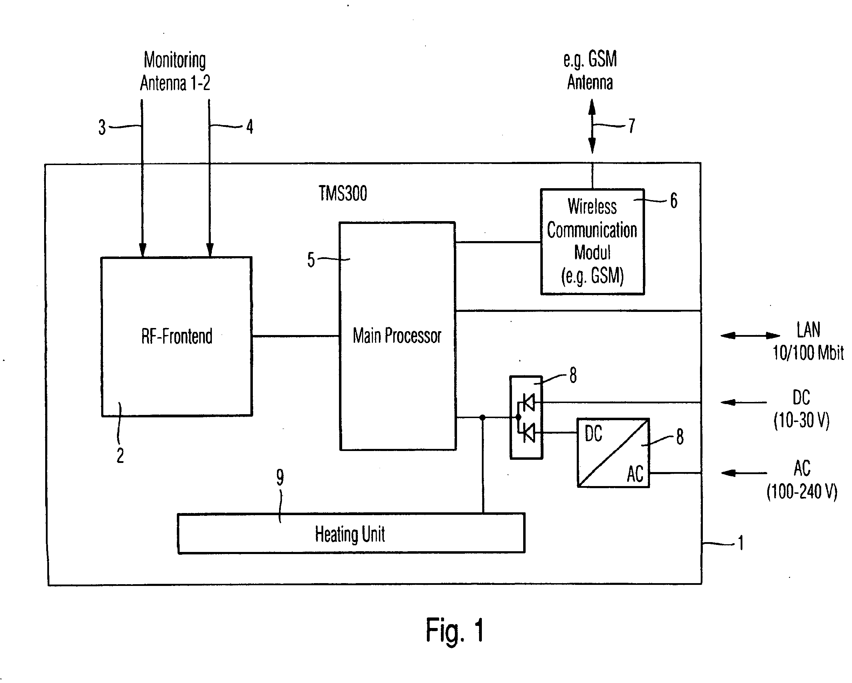

Gemäß dem Blockschaltbild nach Fig. 1 besteht eine Hochfrequenz-Empfangseinheit beispielsweise für den Frequenzbereich von 100 kHz bis 6 GHz aus einem wetterfesten Gehäuse 1, in welchem ein in dem gewünschten Frequenzbereich abstimmbares Hochfrequenz-Empfangsmodul 2 eingebaut ist, dessen Eingang mit im Beispiel zwei außerhalb des Gehäuses befestigten Breitbandantennen 3 und 4 verbunden ist. Die verschiedenen möglichen Einstellungen am Empfängermodul 2 erfolgen über ein Prozessormodul 5, das wie ein üblicher Rechner aufgebaut ist und in dem auch die Empfangsdaten des Empfangsmoduls 2 gespeichert werden. Dieses Prozessormodul 5 ist seinerseits über einen üblichen Rechner in einer Zentrale fernsteuerbar und zwar entweder über ein mit dem Rechner verbundenes übliches LAN-Netz oder drahtlos über ein Mobilfunknetz, beispielsweise GSM. Für den letzteren Fall ist im Gehäuse noch ein zusätzliches Sende-Empfangsmodul 6 für die Verbindung zu einem Mobilfunknetz über eine zusätzlich außen am Gehäuse angebrachte Antenne 7 vorgesehen.

Die im Gehäuse eingebauten Module werden über ein Stromversorgungsmodul 8 gespeist, das entweder an eine Gleichstromquelle DC oder eine Wechselstromquelle AC anschließbar ist, so dass die Empfangseinheit universell aus einer beliebigen Gleichstrom- oder Wechselstromquelle gespeist werden kann. Die Speisequelle kann gegebenenfalls auch eine Solarstrom-Einrichtung sein, die unmittelbar außen am Gehäuse angebracht ist, so dass ein absolut autarker Betrieb der Empfangseinheit beispielsweise auf einem Berggipfel möglich ist.

Die Betriebsweise des Breitband-Empfangsmoduls 2, das vorzugsweise ohne Vorselektion arbeitet, wird über das Prozessormodul 5 eingestellt. Durch Eingabe einer unteren und oberen Grenzfrequenz des insgesamt empfangbaren breiten Empfangsbereiches kann beispielsweise ein Suchlauf-Programm eingestellt werden, das Empfangsmodul sucht dann beispielsweise mit einer Suchlaufgeschwindigkeit von 0,75 Abtastungen pro Sekunde den ausgewählten Frequenzbereich kontinuierlich nach Sendern ab. Das Empfangsmodul 2 kann auch auf ausgewählte Empfangsfrequenzen vorprogrammiert eingestellt werden oder auf vorgegebene Sendepegel. Im Empfangsmodul sind außerdem AM- bzw. FM-Demodulatoren vorgesehen, so dass auch ein unmittelbarer Empfang von Sprachsignalen und deren Auswertung in der Zentrale möglich ist. Zum Empfang von ausgewählten Festfrequenzen werden diese vorzugsweise in einer Liste von der Zentrale in das interne Prozessormodul 5 eingegeben.

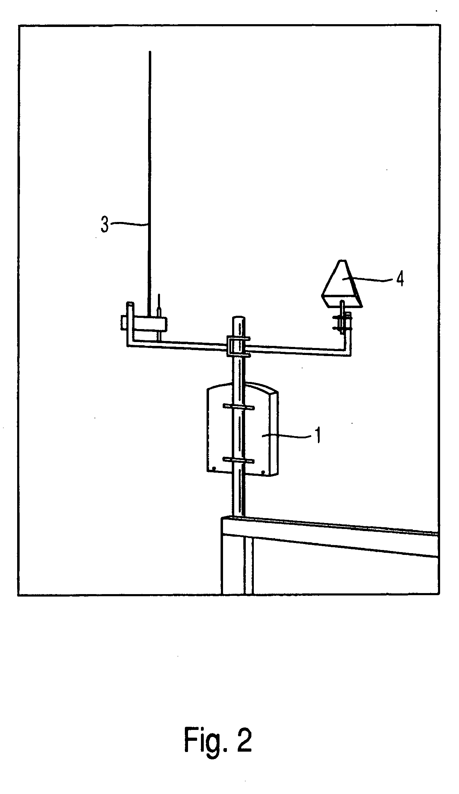

Im allgemeinen ist zum Empfang eine einzige Breitbandantenne ausreichend. Für größere Empfangsbereiche müssen allerdings gegebenenfalls zwei oder mehr Antennen vorgesehen sein. Fig. 2 zeigt beispielsweise eine Breitband-Stabantenne für den Frequenzbereich 100 kHz bis 1,3 GHz und eine passive diskonische Rundstrahlantenne für den Empfangsbereich 1,3 bis 6 GHz, die unmittelbar über ein Gestänge an einem Mast befestigt sind, an dem unmittelbar darunter auch die erfindungsgemäße Empfangseinheit befestigt ist.

Da für die Einstellung des Empfangsmoduls 2 und für deren Empfangsdaten-Weitergabe in der Empfangseinheit das gesonderte Prozessormodul 5 vorgesehen ist, kann die Empfangseinheit jederzeit auf neue Empfangsbedingungen eingestellt werden, ohne dass eine ständige Fernwirk-Verbindung zur Zentrale besteht. Nur für eine Neueinstellung ist kurzzeitig eine Fernbedienungs-Verbindung zur Zentrale erforderlich, was insbesondere von Vorteil ist, wenn diese Fernbedienung über ein Mobilfunknetz erfolgt. Sobald die neue Einstellung in das Prozessormodul 5 eingegeben ist, kann die Mobilfunk-Verbindung wieder unterbrochen werden und die gewählte Einstellung läuft dann vollautomatisch gesteuert über das Prozessormodul 5 im Empfangsmodul ab.

Die Kosten für die Fernsteuerung der Empfangseinheit über das Mobilfunknetz können daher stark reduziert werden, was insbesondere dann von Vorteil ist, wenn eine Vielzahl solcher Empfangseinheiten über eine Zentrale betrieben werden. Nachdem die Empfangsdaten des Empfangsmoduls 2 ebenfalls im Prozessormodul gespeichert werden, können sie über einen üblichen Rechner aus der Zentrale jederzeit auch während des Empfangsbetriebes abgefragt werden. Auch dies kann in kürzester Zeit erfolgen und es ist auch hierfür keine ständige Datenverbindung zwischen Zentrale und Empfangseinheit erforderlich.

Für den Betrieb der Einheit auch in sehr kalten Zonen ist in dem Gehäuse 1 vorzugsweise noch eine ebenfalls über das Stromversorgungsmodul 8 gespeiste Heizeinrichtung 9 eingebaut.

## Patentansprüche

1. System von absolut autarken Hochfrequenz-Empfangseinheiten mit
einer Zentrale bestehend aus einem Rechner und mehreren Hochfrequenz-Empfangseinheiten bestehend jeweils aus einem Gehäuse (1), in welchem ein Empfangsmodul (2) und
ein die Einstellung dieses Empfangsmoduls (2) steuerndes und die Empfangsdaten des Empfangsmoduls (2) aufnehmendes Prozessormodul (5) eingebaut sind,
wobei die Einstellung des jeweiligen Empfangsmoduls (2) über deren Prozessormodul (5) erfolgt,wobei das Prozessormodul (5) jeder Hochfrequenz-Empfangseinheit aus der Zentrale fernbedienbar ist und mittels des Rechners in der Zentrale die gewünschten Einstellungen des jeweiligen Empfangsmoduls (2) in das jeweilige Prozessormodul (5) einlesbar und die durch das jeweilige Empfangsmodul (2) gewonnenen Empfangsdaten aus dem jeweiligen Prozessormodul (5) auslesbar sind,
wobei das jeweilige Empfangsmodul (2) in einem vorbestimmten Frequenzbereich abstimmbar ist und die Fernbedienung aus der Zentrale drahtlos über eine Mobilfunk-Verbindung (GSM) erfolgt, die nach dem Einlesen einer neuen Empfangsmodul-Einstellung bzw. nach dem Auslesen von Empfangsdaten des Empfangsmoduls (2) der jeweiligen Hochfrequenz-Empfangseinheit unterbrochen wird, und
wobei die Hochfrequenz-Empfangseinheiten in dem vorbestimmten Frequenzbereich abstimmbar sind und die Hochfrequenz-Empfangseinheiten im Suchlauf betrieben werden und dabei den ganzen Frequenzbereich durchlaufen oder gesteuert durch das Prozessormodul auf einzelne Festfrequenzen abgestimmt werden, und
wobei die einzelnen Empfangsmodule (2) auf vorgegebene Sendepegel eingestellt werden,
und wobei im Gehäuse (1) ein Sende-Empfangsmodul (6) eingebaut ist für die Verbindung zur Zentrale über ein Mobilfunknetz,
wobei außerhalb des Gehäuses (1) mindestens eine mit dem Eingang des Empfangsmoduls (2) verbundene Breitband-Empfangsantenne (3, 4) befestigt ist
und wobei außerhalb des Gehäuses (1) nebeneinander zwei Breitband-Rundstrahlantennen befestigt sind, von denen die eine einen unteren Teil und die andere einen lückenlos daran anschließenden oberen Teil des Empfangsbereiches abdeckt.

2. System von Hochfrequenz-Empfangseinheiten nach Anspruch 1,
**dadurch gekennzeichnet,**
**dass** für die Mobilfunk-Verbindung im Gehäuse (1) das zusätzliches Mobilfunk-Sende-Empfangs-Modul (6) mit einer außerhalb des Gehäuses (1) angeordneten Antenne eingebaut ist.

3. System von Empfangseinheiten nach Anspruch 1 oder 2,
**dadurch gekennzeichnet,**
**dass** in dem Gehäuse (1) ein die dort eingebauten Module speisendes, an eine Gleichstrom- und/oder Wechselstromquelle anschließbares Stromversorgungsmodul (8) eingebaut ist.

4. System von Empfangseinheiten nach einem der bisherigen Ansprüche,
**dadurch gekennzeichnet,**
**dass** die eine Breitband-Rundstrahlantenne eine Stabantenne und die andere eine diskonische Antenne ist.

5. System von Empfangseinheiten nach einem der vorhergehenden Ansprüche,
**dadurch gekennzeichnet,**
**dass** im Gehäuse (1) ein über das Stromversorgungsmodul (8) speisbares Heizmodul (9) eingebaut ist.

6. System von Empfangseinheiten nach einem der vorhergehenden Ansprüche,
**dadurch gekennzeichnet,**
**dass** das Stromversorgungsmodul (8) über eine außerhalb des Gehäuses angeordnete Solarstrom-Versorgungsquelle oder Brennstoffzellen gespeist ist.

## Claims

1. System of absolutely autonomous radio-frequency receiving units, having
a control centre consisting of a computer and a plurality of radio-frequency receiving units each consisting of a housing (1) in which a receiving module (2) and a processor module (5), which controls the setting of this receiving module (2) and receives the reception data from the receiving module (2), are installed,
the respective receiving module (2) being set via its processor module (5), the processor module (5) of each radio-frequency receiving unit being able to be remotely controlled from the control centre, and the desired settings for the respective receiving module (2) being able to be read into the respective processor module (5) and the reception data obtained by the respective receiving module (2) being able to be read out from the respective processor module (5) using the computer in the control centre,
the respective receiving module (2) being able to be tuned in a predetermined frequency range, and the remote control being carried out wirelessly from the control centre via a mobile radio connection (GSM) which is interrupted after a new receiving module setting has been read in or after reception data from the receiving module (2) of the respective radio-frequency receiving unit have been read out, and
the radio-frequency receiving units being able to be tuned in the predetermined frequency range, and the radio-frequency receiving units being operated in the search run and running through the entire frequency range in the process or being tuned to individual fixed frequencies in a manner controlled by the processor module, and
the individual receiving modules (2) being set to predefined transmission levels,
and a transmitting/receiving module (6) being installed in the housing (1) for connection to the control centre via a mobile radio network,
at least one broadband receiving antenna (3, 4) which is connected to the input of the receiving module (2) being fastened outside the housing (1),
and two broadband omnidirectional antennas being fastened beside one another outside the housing (1), one of which covers a lower part of the receiving range and the other of which covers an upper part of the receiving range which seamlessly adjoins the lower part.

2. System of radio-frequency receiving units according to Claim 1,
**characterized in that**
the additional mobile radio transmitting/receiving module (6) having an antenna arranged outside the housing (1) is installed in the housing (1) for the mobile radio connection.

3. System of receiving units according to Claim 1 or 2,
**characterized in that**
a power supply module (8) which supplies the modules installed in the housing and can be connected to a DC source and/or an AC source is installed in the housing (1).

4. System of receiving units according to one of the preceding claims,
**characterized in that**
one broadband omnidirectional antenna is a rod antenna and the other is a discone antenna.

5. System of receiving units according to one of the preceding claims,
**characterized in that**
a heating module (9) which can be supplied via the power supply module (8) is installed in the housing (1).

6. System of receiving units according to one of the preceding claims,
**characterized in that**
the power supply module (8) is supplied via a solar power supply source arranged outside the housing or via fuel cells.

## Revendications

1. Système d'unités de réception haute fréquence absolument autarciques comportant
une centrale constituée d'un calculateur et de plusieurs unités de réception haute fréquence comportant respectivement un boîtier (1), dans lequel se trouvent un module de réception (2) et un module de processeur (5) commandant le réglage de ce module de réception (2) et enregistrant les données de réception du module de réception (2),
dans lequel le réglage des modules de réception respectifs (2) est effectué par l'intermédiaire de leur module de processeur (5), dans lequel le module de processeur (5) de chaque unité de réception haute fréquence peut être commandé à distance depuis la centrale et les réglages désirés du module de réception respectif (2) sont entrés dans le module de processeur respectif (5) grâce au calculateur dans la centrale et les données de réception obtenues par le module de réception respectif (2) peuvent être lues à partir du module de processeur respectif (5),
dans lequel le module de réception respectif (2) peut être accordé dans un domaine de fréquence prédéterminé et la commande à distance est effectuée de manière sans fil par l'intermédiaire d'une liaison radio (GSM) à partir de la centrale, qui est interrompue après l'entrée d'un nouveau réglage du module de réception ou après la lecture des données de réception du module de réception (2) de l'unité de réception haute fréquence respective, et
dans lequel les unités de réception haute fréquence peuvent être accordées dans un domaine de fréquence prédéterminé et les unités de réception haute fréquence sont activées pour la recherche et ainsi parcourent tout le domaine de fréquences ou, commandées par le module de processeur, sont accordées sur différentes fréquences fixes, et
dans lequel les modules de réception différents (2) sont réglés sur des niveaux d'envoi prédéterminés,
et dans lequel, un module d'envoi-réception (6) est inséré dans le boîtier (1) pour la liaison vers la centrale par l'intermédiaire d'un réseau mobile,
dans lequel au moins une antenne de réception à large bande (3, 4) reliée à l'entrée du module de réception (2) est fixée à l'extérieur du boîtier (1)
et dans lequel deux antennes omnidirectionnelles à large bande sont fixées l'une à côté de l'autre à l'extérieur du boîtier (1), dont l'une recouvre une partie inférieure et l'autre une partie supérieure qui lui est reliée sans interruption du domaine de réception.

2. Système d'unités de réception haute fréquence selon la revendication 1, **caractérisé en ce que**
le module d'envoi-réception radio supplémentaire (6) est inséré dans le boîtier (1) pour la liaison radio avec une antenne disposée à l'extérieur du boîtier (1).

3. Système d'unités de réception selon la revendication 1 ou 2, **caractérisé en ce que**
un module d'alimentation électrique (8) pouvant être relié à une source de courant continu et/ou alternatif alimentant les modules insérés est inséré dans le boîtier (1).

4. Système d'unités de réception selon l'une des revendications précédentes, **caractérisé en ce que**
l'une des antennes omnidirectionnelles à large bande est une antenne fouet et l'autre est une antenne biconique.

5. Système d'unités de réception selon l'une des revendications précédentes, **caractérisé en ce que**
un module de chauffage (9) pouvant être alimenté par l'intermédiaire du module d'alimentation en courant (8) est inséré dans le boîtier (1).

6. Système d'unités de réception selon l'une des revendications précédentes, **caractérisé en ce que**
le module d'alimentation en courant (8) est alimenté par l'intermédiaire d'une source d'alimentation photovoltaïque ou de piles à combustible disposées à l'extérieur du boîtier.
